# FASCICULE DE BREVET EUROPEEN

(11) **EP 2 575 395 B1**
(45) Date de publication et mention de la délivrance du brevet: **08.11.2017**
(21) Numéro de dépôt: 11306257.4
(22) Date de dépôt: 30.09.2011
(51) Int. Cl.: H04W 36/14, H04W 88/06, H04M 7/12

(54) **Terminal téléphonique mobile multi-mode permettant le transfert d'une communication téléphonique d'un réseau sans fil, à un autre**
Mobiles Multimodus-Telefonendgerät, das die telefonische Übertragung von einem drahtlosen Netz zu einem anderen ermöglicht
Multimode mobile telephone terminal allowing a telephone call transfer from one wireless network to another

(43) Date de publication de la demande: 03.04.2013
(73) Titulaire: ALCATEL LUCENT, 92100 Boulogne-Billancourt (FR)
(72) Inventeur: Helbert, Emmanuel, 67400 Illkirch (FR)
(74) Mandataire: Berthier, Karine

(56) Documents cités:
- WO-A2-2007/033485
- WO-A2-2010/091295

## Description

L'invention concerne un terminal téléphonique mobile multi-mode permettant le transfert d'une communication téléphonique d'un réseau sans fil, à un autre ; par exemple d'un réseau de télécommunication global sans fil de type GSM, à un réseau de télécommunication local sans fil, de type SIP sur WiFi, et inversement. Elle est applicable aussi au transfert d'un réseau sans fil global à un autre réseau sans fil global, par exemple d'un réseau XMPP/LTE (Extensible Messaging and Presence Protocol/Long Term Evolution) vers un réseau GSM, et inversement.

Un terminal classique de téléphonie mobile bi-mode WiFi/GSM dispose de deux interfaces radio, permettant respectivement de communiquer via un réseau de télécommunication global sans fil selon la norme GSM, et/ou via un réseau de télécommunication local sans fil selon la norme Wifi, ce dernier étant relié à un réseau public de télécommunication, fixe, par une liaison permanente utilisant le protocole Internet (appelé IP dans ce qui suit) qui permet des communications téléphoniques du type Voix sur Protocole Internet (VOIP, Voice Over IP).

Un réseau global sans fil offre une couverture à l'échelle mondiale mais les communications sont coûteuses. Un réseau local sans fil offre une couverture plus restreinte, incluse dans la couverture précédente, mais les communications du type VoIP, sont peu coûteuses. Par exemple, un centre commercial ou un aéroport peut être équipé d'un réseau local sans fil, accessible au public. Quand un réseau local sans fil couvre le site d'une entreprise, ou l'appartement d'un particulier, l'utilisation de ce réseau local doit être privilégiée pour les communications téléphoniques, en raison de son faible coût. En outre, l'utilisation de ce réseau local à l'intérieur des bâtiments améliore la couverture radio et par là-même l'expérience utilisateur. Enfin, l'accès large bande que propose le réseau local sans fil permet d'établir et de gérer des sessions de communication pouvant comporter un flux vidéo ou simplement utilisant un codeur de la voix large bande. Le terminal étant mobile, le problème se pose de transférer une communication téléphonique entre les deux réseaux, sans interrompre cette communication téléphonique, et sans délai gênant pour les utilisateurs.

On connaît un service appelé **Continuité** d**'Appel Vocal** (Voice Call Continuity ou VCA) qui permet un transfert d'appel, d'un réseau global sans fil à un réseau local sans fil. Un premier inconvénient de ce procédé est qu'il n'est applicable que dans des réseaux de type IMS (IP MultiMedia Subsystem). Un second inconvénient est qu'il nécessite un accord d'itinérance entre les opérateurs gérant respectivement les deux réseaux utilisables. Ce n'est généralement pas le cas lorsque le réseau local sans fil appartient à une entreprise.

Le document WO 2007/033485 décrit un procédé de transfert d'une communication téléphonique d'un réseau GSM et à un réseau Wifi, et réciproquement. Pour transférer vers le réseau GSM une communication établie avec un second terminal quelconque, alors que cette communication a été établie via le réseau local WiFi, le terminal bi-mode commande l'établissement d'une seconde communication via le réseau GSM entre ce terminal bi-mode et une passerelle de conférence téléphonique. Puis il commande la mise en conférence de ces deux communications, puis le relâchement de la communication via le réseau WiFi, en laissant subsister la communication via le réseau GSM. Pour transférer vers le réseau local WiFi une communication qui a été établie via le réseau GSM, le procédé est analogue : il consiste à commander par le terminal bi-mode une mise en conférence avec une nouvelle communication via le réseau GSM, puis relâcher la communication via le réseau GSM. Ce document décrit aussi un terminal bi-mode comportant un gestionnaire d'appels mettant en oeuvre ce procédé. Pour réaliser un transfert de communication selon ce procédé connu, ce gestionnaire d'appels utilise les piles protocolaires WiFi/SIP et GSM disponibles nativement sur le terminal.

Le document WO 2010/091295 décrit un terminal mobile permettant le transfert d'une communication téléphonique d'un réseau sans fil à un autre.

L'inconvénient de ce terminal est que la gestion des appels manque de souplesse pour être adaptable à différents types de réseaux. Elle est fortement liée aux protocoles SIP (Session Initiation Protocol) et GSM : la gestion des appels, et en particulier le transfert de communication, est conçue spécifiquement pour une liaison de type WiFi/SIP et une liaison de type GSM. En effet, le transfert de communication repose sur la commande REFER qui est un message du protocole SIP. Ainsi, il n'est pas possible d'adapter ce gestionnaire d'appels pour permettre un transfert de communication entre des réseaux utilisant des protocoles différents de SIP et GSM. A fortiori, il ne permet pas à un utilisateur d'adapter facilement ce gestionnaire d'appels à son initiative, en téléchargeant et en installant sur le terminal une application après l'acquisition du terminal.

En outre, un tel gestionnaire d'appels ne permet pas d'initier un transfert de communication à l'initiative d'une application tierce, telle qu'une application exécutée dans un serveur de géolocalisation, parce que ce gestionnaire d'appels est localisé dans le terminal sur lequel a lieu le transfert d'appel. En effet, pour des raisons liées à l'évanescence des connexions radio, il est plus robuste de localiser la décision d'initier le transfert de communication au coeur du réseau en se basant sur des observations de l'état de connexion du terminal mobile. Un serveur de géolocalisation peut permettre cela.

Un autre inconvénient de ce terminal est qu'il ne permet pas de gérer la mobilité du terminal entre des réseaux sans fil supportant des protocoles de communication différents lorsque ce terminal n'est pas en phase de communication parce que la commande REFER ne s'applique que pour des sessions SIP existantes. Ainsi la gestion du routage pour les appels à destination de ce terminal n'est pas possible. Ceux-ci s'effectueront toujours sur l'interface dont la disponibilité est la plus probable (Le réseau global sans fil, dans ce cas).

Le but de l'invention est de proposer un terminal multimode qui n'ait pas ces inconvénients.

L'objet de l'invention est un terminal téléphonique mobile multimode selon la revendication 1. Le terminal ainsi caractérisé peut être facilement adapté pour permettre un transfert de communication entre des réseaux utilisant des protocoles différents de SIP et GSM parce que la couche d'abstraction permet d'échanger des commandes et des informations génériques avec tout nouveau dispositif de communication. En particulier, un utilisateur peut télécharger puis installer de nouveaux dispositifs de communication après l'acquisition du terminal.

Le terminal ainsi caractérisé permet de gérer un transfert de communication initié par une application tierce qui peut être hébergée sur n'importe quel type de machine ou de serveur, telle qu'une application exécutée dans un serveur de géolocalisation, parce que le gestionnaire d'appel, au travers de la couche d'abstraction qui le relie aux dispositifs de communication est capable de faire correspondre les informations données par ces dispositifs à l'appel en cours de transfert et ainsi de décider du décrochage et raccrochage des appels sur lesdits dispositifs de communication afin de maintenir la continuité de la communication.

Le terminal ainsi caractérisé permet de gérer la mobilité du terminal entre des réseaux sans fil supportant des protocoles de communication différents, même lorsque ce terminal n'est pas en phase de communication, parce que le moniteur d'accès est capable de piloter les dispositifs de communication en fonction de l'environnement courant du terminal. Il est en particulier capable d'activer un ou plusieurs dispositifs de communication dès qu'il détecte la présence d'une connexion sans fil connue pour supporter le ou les protocoles de communication gérés par les dispositifs de communication installés dans le terminal. En outre, le moniteur d'accès est capable d'activer ou désactiver un ou plusieurs dispositifs de communication selon des notifications reçues depuis une application tierce telle qu'une application de gestion de flotte de terminaux.

L'invention sera mieux comprise et d'autres caractéristiques apparaîtront à l'aide de la description ci-dessous et des figures l'accompagnant :
- La figure 1 représente le schéma fonctionnel d'un exemple de réalisation du terminal selon l'invention.
- La figure 2 illustre un exemple d'utilisation d'un terminal selon l'invention.
- La figure 3 représente les échanges de signaux dans un exemple de transfert d'une communication d'un réseau SIP/WiFi vers un réseau GSM, déclenché par le terminal.
- La figure 4 représente les échanges de signaux dans un exemple de transfert d'une communication d'un réseau GSM vers un réseau SIP/WiFi, déclenché par le terminal.
- La figure 5 représente les échanges de signaux dans un exemple de déplacement d'un terminal bi-mode d'un réseau WiFi vers un réseau GSM, pour désactiver un dispositif SIP/WiFi et activer à sa place un dispositif GSM, lorsqu'aucune communication téléphonique n'est en cours.
- La figure 6 représente les échanges de signaux dans un exemple de transfert d'une communication d'un réseau SIP/WiFi vers un réseau GSM, déclenché par une application tierce exécutée par un serveur distant.
- La figure 7 représente les échanges de signaux dans un exemple de transfert d'une communication d'un réseau GSM vers un réseau SIP/WiFi, déclenché par une application tierce exécutée par un serveur distant.
- La figure 8 représente les échanges de signaux dans un exemple de transfert d'une communication d'un réseau XMPP/LTE (Extensible Messaging and Presence Protocol/Long Term Evolution) vers un réseau GSM, déclenché par le terminal.
- La figure 9 représente les échanges de signaux dans un exemple de transfert d'une communication d'un réseau GSM vers un réseau XMPP/LTE, déclenché par le terminal.

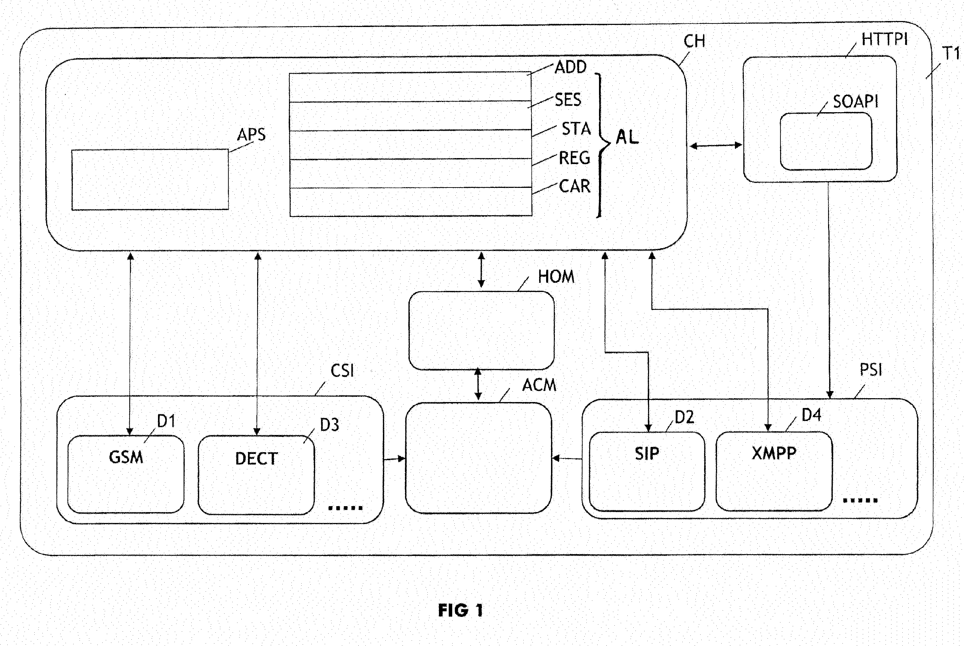

Sur la **figure 1****,** un exemple de réalisation T1 du terminal selon l'invention comporte :
- Une interface CSI qui supporte les communications à commutation de circuits. Par exemple, elle comporte un dispositif de communication GSM D1, mais elle peut comporter en outre un dispositif de communication D3 pour les communications DECT (Digital Enhanced Cordless Telephone), un dispositif de communication pour les communications DECT (Digital Enhanced Cordless Telephone), CDMA, ... etc.
- Une interface PSI qui supporte les communications à commutation de paquets. Par exemple, elle comporte un dispositif de communication SIP D2, mais elle peut comporter en outre un dispositif de communication D4 pour les communications XMPP (Googletalk) ou SKYPE sur un réseau LTE, ... etc. Elle supporte un protocole de transmission de données, par exemple HTTP (Hypertext Transfer Protocol). Certains de ces dispositifs de communication ont été téléchargés et installés par l'utilisateur postérieurement à l'achat du terminal.
- Un gestionnaire de transfert de communication, HOM, qui décide les transferts de communication selon les circonstances (Présence de tel ou tel réseau sans fil).
- Un moniteur d'accès ACM qui active ou désactive les dispositifs D1-D4, ... etc. que comportent les interfaces CSI et PSI, en fonction des informations d'état de disponibilité de ces dispositifs ainsi que de préférences définies par l'utilisateur ou un administrateur de flotte mobile, en utilisant des identifiants définis dans les protocoles de communication propres à ces dispositifs. Par exemple : l'identifiant IMEI (International Mobile Equipment Identity) pour un dispositif GSM, l'identifiant URI (Universal Resource Identifier) pour un dispositif SIP, l'identifiant MEID (Mobile Equipment IDentity) pour un dispositif CDMA, en fonction des décisions de transfert de communication du gestionnaire de transfert de communication, HOM. Le moniteur d'accès ACM indique à celui-ci le statut courant des dispositifs de communication D1-D4 ... etc. Le moniteur d'accès ACM est ainsi capable de piloter les dispositifs de communication en fonction de l'environnement courant du terminal. Il est en particulier capable d'activer un ou plusieurs dispositifs de communication dès qu'il détecte la présence d'une connexion sans fil connue pour supporter le ou les protocoles de communication gérés par les dispositifs de communication installés dans le terminal. En outre, il est capable d'activer ou désactiver un ou plusieurs dispositifs de communication selon des notifications reçues depuis une application tierce telle qu'une application de gestion de flotte de terminaux. Le moniteur d'accès ACM permet également de récupérer et transmettre au gestionnaire d'appel CH les évènements émis par les dispositifs D1-D4 ... etc pour lesquels le moniteur d'accès ACM s'est enregistré.
- Une interface de transmission de données, HTTPI, supportant le protocole HTTP.
- Un gestionnaire d'appels CH, qui gère les appels multimédia présentés à l'utilisateur en fonction du statut courant de chacun des dispositifs D1-D4 ... etc. Il gère le basculement éventuel d'une session multimédia d'un dispositif D1-D4 ... etc, vers un autre en fonction des signaux provenant du gestionnaire de transfert de communication HOM : Il comporte des moyens logiciels APS pour associer une pluralité de sessions multi-média établies au travers des dispositifs de communication D1-D4 ... etc à un même appel en cours de transfert. Ce gestionnaire d'appels CH commande les dispositifs D2, D4, ... etc, de l'interface PSI pour émettre et recevoir de données, à destination et en provenance d'un serveur d'applications (situé dans un réseau) via l'interface de transmission de données, HTTPI, et éventuellement via une interface SOAPI supportant le protocole SOAP (Simple Object Access Protocol). Le gestionnaire d'appels CH comporte une couche d'abstraction qui permet d'échanger des commandes génériques et des informations génériques avec tous les dispositifs de communication D1-D4 ... etc que peut comporter le terminal. Grâce à cette couche d'abstraction, il est capable de gérer toutes sortes de dispositifs de communications D1-D4, ... etc, c'est-à-dire toutes sortes de piles protocolaires, notamment des piles protocolaires téléchargées par l'utilisateur.

Selon un mode de réalisation préférentiel, la couche d'abstraction AL qui permet d'échanger des commandes génériques comporte :
- des moyens logiciels AAD pour activer et désactiver les dispositifs de communication D1-D4 ... etc,
- des moyens logiciels SES pour initier, prendre et terminer une session multimédia ;
- des moyens logiciels STA pour consulter l'état courant des sessions multimédia gérées par les dispositifs de communication, et récupérer ainsi des évènements. Ces moyens STA permettent au gestionnaire d'appel CH de récupérer les évènements émis par les dispositifs D1-D4 ... etc pour lesquels le gestionnaire d'appel CH s'est enregistré
- des moyens logiciels REG pour enregistrer le moniteur d'accès auprès des dispositifs de communication D1-D4 ... etc afin de pouvoir transmettre au moniteur d'accès (ACM) des notifications relatives à l'état courant des dispositifs de communication.
- et des moyens logiciels CAR pour caractériser les sessions multimédia établies au travers des dispositifs de communication D1-D4 ... etc afin de permettre d'associer lesdites sessions à un même appel en court de transfert.

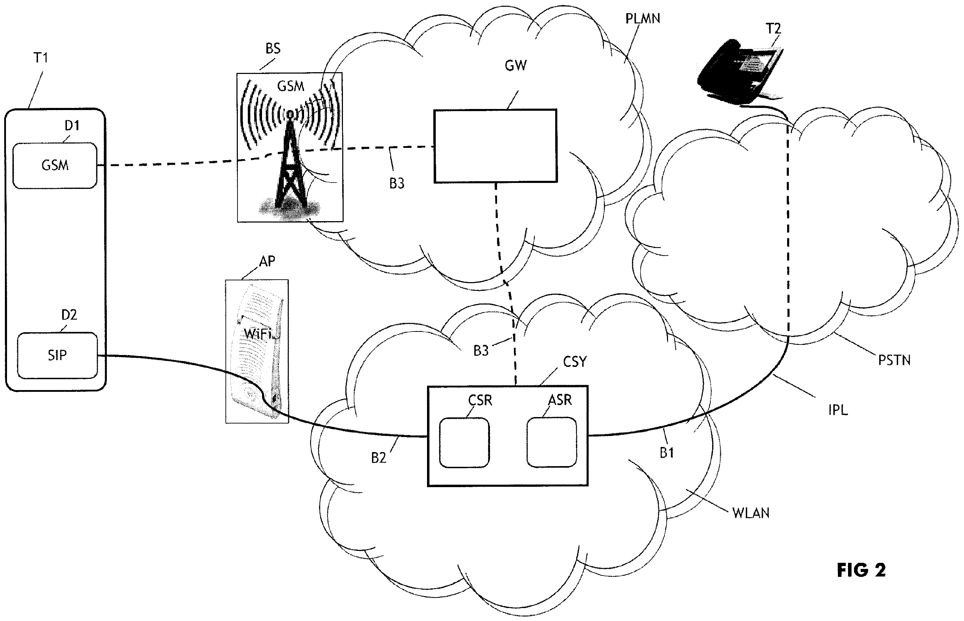

Dans un premier exemple d'utilisation, illustré par la figure 2, le terminal téléphonique mobile T1 est utilisé en mode SIP/WiFi puis en mode GSM. Son dispositif GSM D1 lui permettant de se connecter à un réseau global sans fil PLMN, de type GSM, et son dispositif SIP D2 lui permettant de se connecter à un réseau local sans fil WLAN, de type WiFi et utilisant le protocole de signalisation SIP (Session Initialization Protocol). Ce réseau local sans fil WLAN appartient par exemple à une entreprise.

Le réseau local WLAN comporte un système de communication d'entreprise CSY relié à des points d'accès radio AP par un réseau filaire Ethernet non représenté. Ce système de communication CSY est apte à commuter des communications de type voix ou vidéo sur protocole Internet, à l'intérieur du réseau local WLAN, en fournissant des services supplémentaires, notamment en permettant la conférence à trois, voire plus. Pour cela, il comporte un serveur de communication CSR et un serveur d'applications ASR.

Le système de communication CSY du réseau local WLAN est relié au réseau public fixe PSTN par une liaison IPL utilisant le protocole Internet (IP). Une passerelle (non représentée) est intégrée au réseau public PSTN pour faire l'interface entre cette liaison IPL et des terminaux classiques, analogiques, reliés à ce réseau public PSTN.

Le système de communication CSY du réseau local WLAN est relié au réseau global sans fil PLMN par une autre liaison utilisant le protocole Internet. Une passerelle GW est intégrée au réseau global PLMN pour faire l'interface entre cette liaison IP et ce réseau GSM.

Au moment considéré, le terminal T1 est en plein dans la zone de couverture du réseau local WLAN. Une communication est en cours via le réseau local WLAN. Ce réseau local WLAN a été choisi plutôt que le réseau global PLMN, pour bénéficier d'un tarif plus avantageux. La sélection du réseau est faite par un procédé automatique connu. Le système de communication CSY a établi une connexion qui comprend une branche B1 reliant le système de communication CSY au réseau public fixe PSTN par la liaison IPL, et une branche B2 reliant le système de communication CSY au terminal T1 par le point d'accès radio AP.

Par la suite, le terminal mobile T1 est en déplacement et il approche de la limite de la couverture radio du réseau local WLAN. Le dispositif GSM D1 du terminal bi-mode T1 écoute périodiquement les stations de base GSM qu'il peut capter. Le terminal T1 sait ainsi qu'il peut établir une communication via une station de base BS dans cet exemple. Il demande alors au système de communication CSY de réaliser un transfert de la communication du réseau local WLAN au réseau global PLMN. Le système de communication CSY réalise alors une connexion entre la branche B2 et une nouvelle branche B3 qui le relie à la station de base BS, via une passerelle GW dans le réseau global PLMN.

Le terminal mobile T1 reçoit donc une notification d'appel, sur le dispositif D1, de manière classique. Il reçoit des données de signalisation qui contiennent le numéro de l'appelé et le numéro de l'appelant. Le terminal T1 comporte des moyens pour :
- analyser ce numéro de l'appelant,
- détecter si le numéro de l'appelant est identique au numéro de l'appelé (son propre numéro),
- et si c'est le cas il accepte une seconde communication sans sonner.

Le système de communication CSY réalise ensuite une mise en conférence de cette seconde communication B2-B3 avec la première communication B1-B2, de manière classique pour une conférence à trois. Le terminal bi-mode T1 est alors en communication avec le terminal T2 simultanément par deux communications téléphoniques, B1-B2 et B1-B3, mises en conférence.

Le système de communication CSY relâche ensuite la première communication : Il relâche la branche B2. Il maintient la connexion entre la branche B3 et la branche B1. La seconde communication B1-B3 remplace la première communication sans aucune gêne pour les utilisateurs : Il n'y a aucune interruption puisque les deux communications coexistent pendant un certain temps.

Pour les utilisateurs, tout se passe comme si le segment radio de la communication avait été transféré instantanément du réseau local WLAN au réseau global PLMN. Il est à noter que la communication continue à passer par le système de communication CSY, et donc l'utilisateur du terminal T1 continue à bénéficier des services que peut fournir ce système.

Considérons le cas du transfert inverse, c'est à dire du réseau global PLMN vers le réseau local WLAN. Le dispositif WiFi D2 du terminal bi-mode T1 est à l'écoute des points d'accès WiFi, périodiquement. Le terminal T1 demande au système de communication CSY de réaliser une procédure de transfert de la communication du réseau global PLMN au réseau local WLAN quand il détecte qu'il est dans la zone de couverture du réseau local WLAN, et qu'il a vérifié qu'il a le droit d'accéder à ce réseau. Le dispositif WiFi D2 du terminal bi-mode T1 s'associe au point accès AP, par exemple, puis se fait authentifier par le réseau local WLAN, selon un procédé connu. Le terminal T1 signale sa présence au système de communication CSY l'autocommutateur PBX. Ce dernier sait que le terminal T1 est associé au point d'accès AP3, par un procédé classique. Il est désormais capable d'acheminer une communication vers ce terminal T1, si ce terminal T1 est appelé ou s'il est en cours de communication. Le transfert d'une communication du réseau global PLMN vers le réseau local WLAN est réalisé de manière analogue à celle décrite précédemment : Le système de communication CSY réalise temporairement une conférence à trois puis relâche ensuite la branche qui n'est plus utile. Pendant ce temps, le terminal T1 continue à communiquer avec le terminal T2 via la station de base BS, le réseau sans fil global PLMN, et le réseau public fixe PSTN. Il n'y a donc aucune interruption.

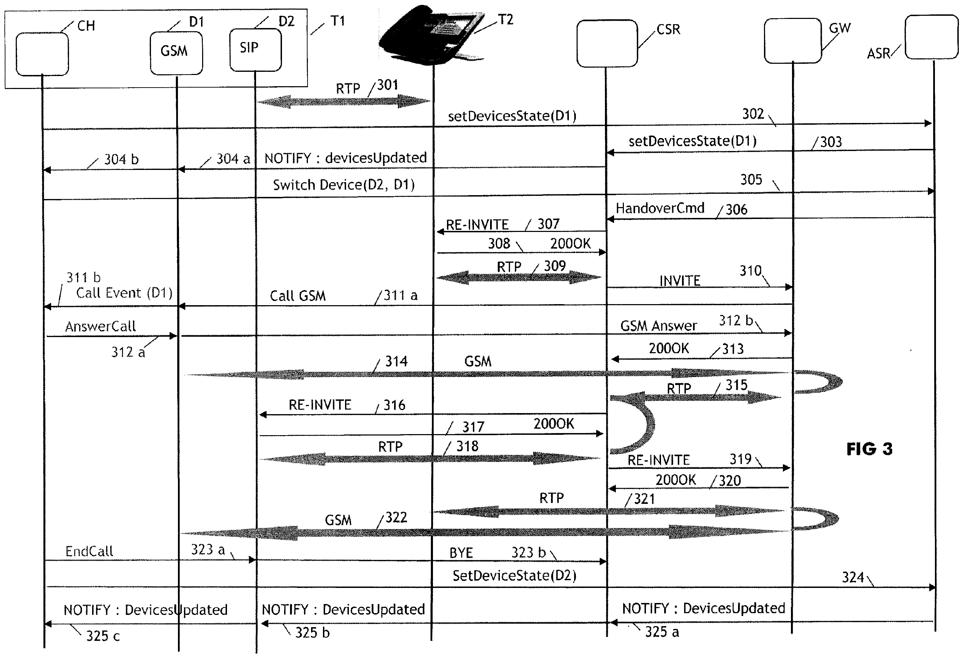

La **figure 3** représente les échanges de signaux dans un exemple de transfert d'une communication d'un réseau local SIP/WiFi vers un réseau global GSM, déclenché par le terminal :
- 301 : Une communication VOIP a été établie entre le dispositif SIP D2 du terminal T1 et un terminal quelconque T2 relié au réseau public fixe PSTN. Cette communication utilise le protocole RTP pour le transport des signaux vocaux.
- 302 : Le terminal T1 détecte qu'il est en train de quitter la zone de couverture du réseau SIP/WIFI. Le gestionnaire d'appels CH du terminal T1 active alors le dispositif GSM D1 et il décide de déclencher un transfert de la communication du réseau local SIP/WiFi vers le réseau global GSM. Pour commander au serveur de communication CSR de faire ce transfert, le gestionnaire d'appels CH envoie au serveur d'application ASR, via le dispositif GSM D1, un message « SetDevicesState(D1) ». Ce message contient l'identificateur IMEI (International Mobile Equipment Identity) du dispositif GSM D1. Ce message est interprété par le serveur d'application ASR comme signifiant que le dispositif GSM D1 est activé. Autrement dit, une communication peut passer par le réseau global GSM.
- 303 : Le serveur d'applications ASR retransmet le message « SetDevicesState(D1) » au serveur de communication CSR.
- 304 a : Le serveur de communication CSR envoie un message «NOTIFY : DevicesUpdated » au dispositif GSM D1 pour indiquer qu'il a bien enregistré que le dispositif GSM D1 a été activé.
- 304 b : Le dispositif GSM D1 retransmet ce message «NOTIFY : DevicesUpdated » au gestionnaire d'appels CH. Selon une variante, ce message peut être envoyé directement du serveur de communication CSR vers le gestionnaire d'appels CH au travers de l'interface de transmission et de réception des données HPI utilisant l'interface PSI.
- 305 : Le gestionnaire d'appels CH envoie au serveur d'applications ASR, via l'interface de transmission de données HTTPI et l'interface PSI, un message -switchDevice(D2, D1) » pour demander le transfert de la communication vers le réseau GSM.
- 306 : Le serveur d'application ASR envoie alors un message « HandoverCmd » au serveur de communication CSR. Ce message est interprété par le serveur d'application ASR comme signifiant qu'il doit réaliser un transfert de communication vers le dispositif GSM D1 qui vient d'être activé.
- 307 : Le serveur de communication CSR réalise le transfert de communication en commençant par établir une nouvelle communication entre le terminal T2 et le terminal T1 via le réseau global GSM , en envoyant un message «RE-INVITE » au terminal T2. Ce message lui demande l'autorisation de modifier la session en cours en vue de réaliser une conférence à trois.
- 308 : Le terminal T2 répond par un message d'acceptation 200OK.
- 309 : Une nouvelle communication, supportée par le protocole RTP, est alors établie entre le terminal T2 et le serveur de communication CSR, via une passerelle non représentée, intégrée au réseau publique fixe PSTN.
- 310 : Le serveur de communication CSR envoie un message « INVITE » à la passerelle GW, en vue d'établir une autre nouvelle communication via le réseau global GSM.
- 311a : La passerelle GW envoie un message d'appel « Call GSM » au dispositif GSM D1 du terminal T1.
- 311b : Le dispositif GSM D1 envoie alors un message « Call Event (D1) « au gestionnaire d'appel CH pour l'informer de l'arrivée d'un appel.
- 312 a : Le gestionnaire d'appel CH répond au dispositif GSM D1 par un message « Answer Call » qui lui commande de prendre l'appel.
- 312 b : Le dispositif GSM D1 prend l'appel: Il répond en envoyant à la passerelle GW un message « GSM Answer ».
- 313 : La passerelle GW convertit ce message« GSM Answer » en un message « 200OK » qu'elle envoie au serveur de communication CSR.
- 314, 315 : Une nouvelle communication est établie entre le dispositif GSM D1 du terminal T1, et le serveur de communication CSR, via la passerelle GW. Une première partie GSM, référencée 314, de cette nouvelle communication utilise les protocoles GSM pour le transport des signaux vocaux entre le dispositif GSM D1 du terminal T1et la passerelle GW. Une deuxième partie VOIP, référencée 315, de cette nouvelle communication utilise le protocole RTP pour le transport des signaux vocaux de la passerelle GW au serveur de communication CSR.
- 316 : Le serveur de communication envoie un message « RE-INVITE » au dispositif SIP D2 du terminal T1 pour demander une modification de la session en cours, en vue de réaliser une conférence à trois.
- 317 : Le dispositif SIP D2 accepte en envoyant un message « 200OK » au serveur de communication CSR.
- 318 : Une autre nouvelle communication VOIP est établie entre le serveur de communication CSR et le dispositif SIP D2 du terminal T1. Cette communication utilise le protocole RTP pour le transport des signaux vocaux. Temporairement, le serveur de communication CSR relie ces deux communications 314 - 315 et 318 de façon que le terminal T2 soit en conférence avec le dispositif GSM D1 et le dispositif SIP D2 du terminal T1. Le terminal T1 connecte ses interfaces homme-machine (micro, écran, lecteur vidéo) au dispositif GSM D1.
- 319 : Le serveur de communication envoie un message « RE-INVITE » à la passerelle GW pour modifier les sessions en cours de façon à ce que la communication entre le dispositif GSM D1 et le terminal T2 ne passe plus par le serveur de communication CSR mais passe seulement par la passerelle GW.
- 320 : La passerelle répond par un message « 200OK ».
- 321, 322 : Une communication relie alors le terminal T2 et le dispositif GSM D1 via la passerelle GW. Une partie 321 de cette communication, entre le terminal T2 et la passerelle GW, est supportée par le protocole RTP. Une seconde partie de cette communication 322, entre la passerelle GW et le dispositif GSM D1 du terminal T1, est supportée par les protocoles GSM. Une nouvelle communication est donc établie entre les terminaux T1 et T2, en passant par le réseau global GSM.
- 323 a : Le gestionnaire d'appels CH termine la communication qui existait entre le terminal T2 et le dispositif SIP D2 en envoyant un message de fin d'appel « EndCall » vers ce dispositif SIP D2.
- 323 b : Le dispositif SIP D2 envoie alors un message « BYE » au serveur de communication CSR pour lui demander de relâcher la communication 318 via le réseau local SIP/WIFI.
- 324 : Le gestionnaire d'appels CH envoie en outre un message « SetDeviceState(D2) » au serveur d'application ASR, via l'interface de transmission de données HTTPI et PSI, pour indiquer que le dispositif SIP D2 va être désactivé. Ce message peut également être remplacé par un message SIP UNREGISTER qui indique que le dispositif SIP D2 n'est plus accessible. Le serveur d'application ASR enregistre ce changement d'état du dispositif SIP D2 du terminal T1.
- 325 a : Le serveur d'application ASR accuse réception en envoyant un message « NOTIFY : DevicesUpdated » au serveur de communication CSR. Le serveur de communication CSR enregistre ce changement d'état.
- 325 b : Le serveur de communication CSR retransmet ce message « NOTIFY : DevicesUpdated » au dispositif SIP D2 du terminal T1.
- 325 c : Le dispositif SIP D2 du terminal T1 retransmet ce message « NOTIFY : DevicesUpdated » au gestionnaire d'appels CH.

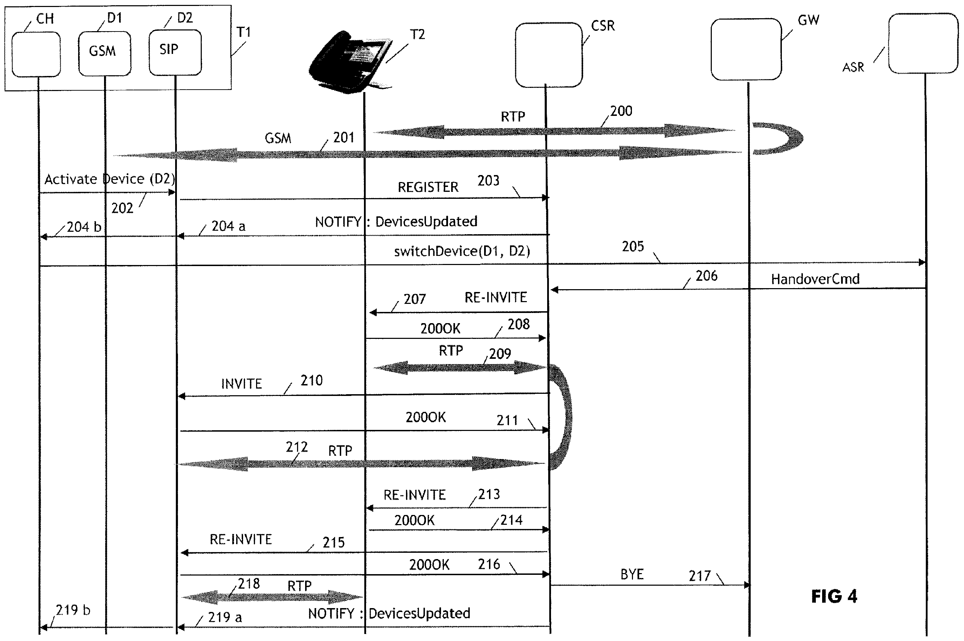

La **figure 4** représente les échanges de signaux dans un exemple de transfert d'une communication d'un réseau GSM vers un réseau SIP/WiFi, déclenché par le terminal :
- 200, 201 : Une communication a été établie entre le dispositif GSM D1 du terminal T1, et un terminal quelconque T2 relié au réseau public fixe PSTN. Cette communication comporte une première partie VOIP, référencée 200, utilisant le protocole RTP (Real Time Transport Protocole) pour le transport des signaux vocaux entre le terminal T2 et la passerelle GW via le serveur de communication CSR ; et une seconde partie 202 utilisant la pile de protocoles GSM pour le transport des signaux vocaux entre le dispositif GSM, D1, du terminal T1 et la passerelle GW.
- 202 : Au moment où le terminal T1 détecte qu'il est entré dans la zone de couverture du réseau local SIP/WIFI, le gestionnaire d'appels CH du terminal T1 envoie au dispositif SIP D2 un ordre « Activate Device (D2) » pour l'activer.
- 203 : Puis le dispositif SIP D2 du terminal T1 envoie un message « REGISTER » au serveur de communication CSR, dans le système de communication d'entreprise CSY. Ce message REGISTER contient l'identificateur URI (Universal Ressource Identifier) du dispositif SIP D2. Ce message est interprété par le serveur de communication CSR comme signifiant que le dispositif SIP D2 est activé. Autrement dit, une communication ne doit passer désormais que par le réseau local SIP/WIFI.
- 204 a : Le serveur de communication CSR répond au dispositif SIP D2 du terminal T1 par un message « NOTIFY : Devices updated » qui indique qu'il a mémorisé le fait que le dispositif SIP D2 est activé.
- 204 b : Le dispositif SIP D2 retransmet ce message « NOTIFY : Devices updated » au gestionnaire d'appels CH.
- 205 : Le gestionnaire d'appels CH peut alors demander au serveur d'application ASR qui est intégré au système de communication d'entreprise CSY, un transfert de la communication en cours, du réseau global GSM au réseau local SIP/WIFI. Il fait cette demande en envoyant un message de demande de service « switchDevice(D1, D2) », via l'interface de transmission de données HTTPI et l'interface PSI. Ce réseau de transmission de données peut être un réseau global de type GPRS, EDGE, CDMA, HSDPA, ou il peut être le réseau local sans fil SIP/WIFI de l'entreprise considérée.
- 206 : Le serveur d'application ASR envoie alors un message « HandoverCmd » au serveur de communication CSR. Ce message est interprété par le serveur de communication CSR comme signifiant qu'il doit réaliser un transfert de communication vers le dispositif SIP D2 qui vient d'être activé.
- 207 : Le serveur de communication CSR réalise le transfert de communication en commençant par établir une nouvelle communication entre le terminal T2 et le terminal T1 via le réseau local SIP/WIFI, en envoyant un message «RE-INVITE » au terminal T2. Ce message lui demande l'autorisation de modifier la session en cours, en vue de réaliser une conférence à trois.
- 208 : Le terminal T2 répond par un message d'acceptation 200OK.
- 209: Une première partie d'une nouvelle communication VOIP est alors établie entre le terminal T2 et le serveur de communication CSR (via une passerelle, non représentée, intégrée au réseau fixe public PSTN). Elle est supportée par le protocole RTP.
- 210 : Le serveur de communication CSR envoie un message INVITE au dispositif SIP D2 du terminal T1 pour établir une seconde partie de la nouvelle communication, via le réseau local SIP/WIFI.
- 211 : Le dispositif SIP D2 du terminal T1 répond par un message d'acceptation 200OK. Le terminal T1 connecte ses interfaces homme-machine (micro, écran, lecteur vidéo) au dispositif SIP D2.
- 212 : Une seconde partie de la nouvelle communication VOIP est alors établie entre le dispositif SIP D2 du terminal T1 et le serveur de communication CSR. Elle est supportée par le protocole RTP. La nouvelle communication 209-212 est donc établie entre les terminaux T1 et T2, en passant par le réseau local SIP/WIFI. Temporairement, le serveur de communication CSR relie l'ancienne communication 200 - 201 et la nouvelle communication 209 - 212 de façon que le terminal T2 soit en conférence à trois, avec le dispositif GSM D1 et le dispositif SIP D2 du terminal T1.
- 213 : Le serveur de communication CSR envoie un message «RE-INVITE » au terminal T2 via le réseau local SIP/WIFI. Ce message lui demande l'autorisation de modifier la session en cours.
- 214 : Le terminal T2 répond par un message d'acceptation 200OK.
- 215 : Le serveur de communication CSR envoie un message «RE-INVITE » au dispositif SIP D2 du terminal T1. Ce message lui demande l'autorisation de modifier la session en cours.
- 216 : Le dispositif SIP D2 du terminal T1 répond par un message d'acceptation 200OK.
- 217 : Le serveur de communication CSR envoie un message «BYE » à la passerelle GW pour libérer l'ancienne communication via le réseau global GSM. Le terminal T1 désactive le dispositif GSM D1.
- 218 : Une communication VOIP, supportée par le protocole RTP, est alors établie directement entre le terminal T2 et le dispositif SIP D2 du terminal T1.
- 219 a : Le serveur de communication CSR envoie un message «NOTIFY : DevicesUpdated » au dispositif SIP D2 du terminal T1 pour lui indiquer qu'il a enregistré que le dispositif GSM D1 a été désactivé.
- 219 b : Le dispositif SIP D2 retransmet ce message «NOTIFY : DevicesUpdated » au gestionnaire d'appels CH.

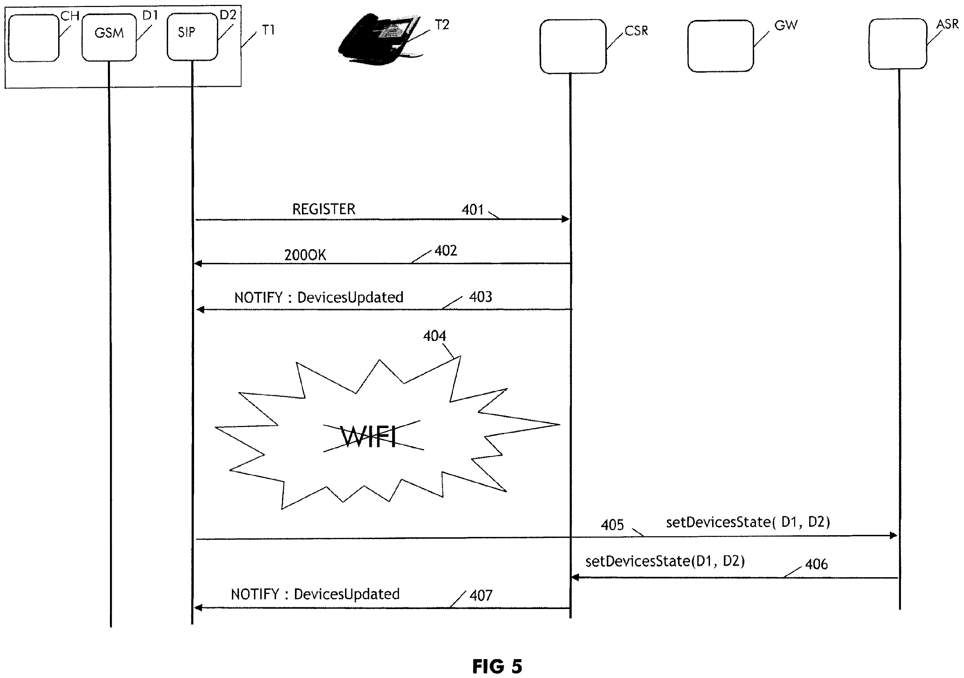

La **figure 5** représente les échanges de signaux dans un exemple de déplacement d'un terminal bi-mode d'un réseau GSM vers un réseau SIP/WiFi avec activation du dispositif SIP, puis d'un réseau SIP/WiFi vers un réseau GSM, pour désactiver le dispositif SIP/WiFi et activer à sa place un dispositif GSM lorsqu'aucune communication téléphonique n'est en cours :
- 401 : A l'instant considéré, le dispositif GSM D1 est activé, alors que le dispositif SIP D2 est désactivé. Le terminal T1 détecte qu'il entre dans la zone de couverture du réseau local SIP/WIFI, alors qu'il n'y a aucune communication téléphonique en cours. Sur commande du gestionnaire de communication CH, Le dispositif SIP D2 envoie alors un message « REGISTER » au serveur de communication CSR. Ce message est interprété par le serveur de communication CSR comme indiquant que le terminal T1 a activé son dispositif SIP D2. Le serveur de communication CSR enregistre ce changement d'état. Autrement dit, une communication éventuelle ne doit passer désormais que par le réseau supportant le protocole de communication SIP, en l'occurrence le réseau local SIP/WIFI dans cet exemple.
- 402 : Le serveur de communication CSR envoie un message « 200OK » comme accusé de réception, au dispositif SIP D2. Cette confirmation signifie également que le serveur de communication CSR a enregistré que le dispositif GSM D1 est désactivé.
- 403 : Puis le serveur de communication CSR envoie un message « NOTIFY : DevicesUpdated » au dispositif SIP D2 pour confirmer qu'il a bien enregistré le changement d'état du terminal T1.
- 404 : Par la suite, le terminal T1 détecte qu'il est en train de sortir de la zone de couverture du réseau local SIP/WIFI, alors qu'il n'y a toujours aucune communication téléphonique en cours.
- 405 : Le gestionnaire de communication CH envoie alors au travers de l'interface de transmission de données HTTPI et de l'interface PSI, un message « SetDevicesState(D1, D2) » au serveur d'application ASR. Ce message contient l'identificateur URI (Universal Ressource Identifier) du dispositif SIP D2 ainsi que l'identificateur IMEI (International Mobile Equipment Identity) du dispositif GSM D1. Ce message est interprété par le serveur d'application ASR comme signifiant que le dispositif GSM D1 est activé, et que le dispositif SIP D2 est désactivé. Autrement dit, une éventuelle communication ne doit passer que par le réseau global GSM.
- 406 : Le serveur d'application ASR enregistre ce changement d'état du dispositif SIP D2 du terminal T1. Il accuse réception en envoyant un message « NOTIFY : DevicesUpdated » au serveur de communication CSR. Le serveur de communication CSR enregistre ce changement d'état.
- 407 : Le serveur de communication CSR retransmet ce message « NOTIFY : DevicesUpdated » au dispositif SIP D2 du terminal T1, comme accusé de réception. Ce message est relayé au gestionnaire de communication CH afin de centraliser l'information de disponibilité des dispositifs de communication.

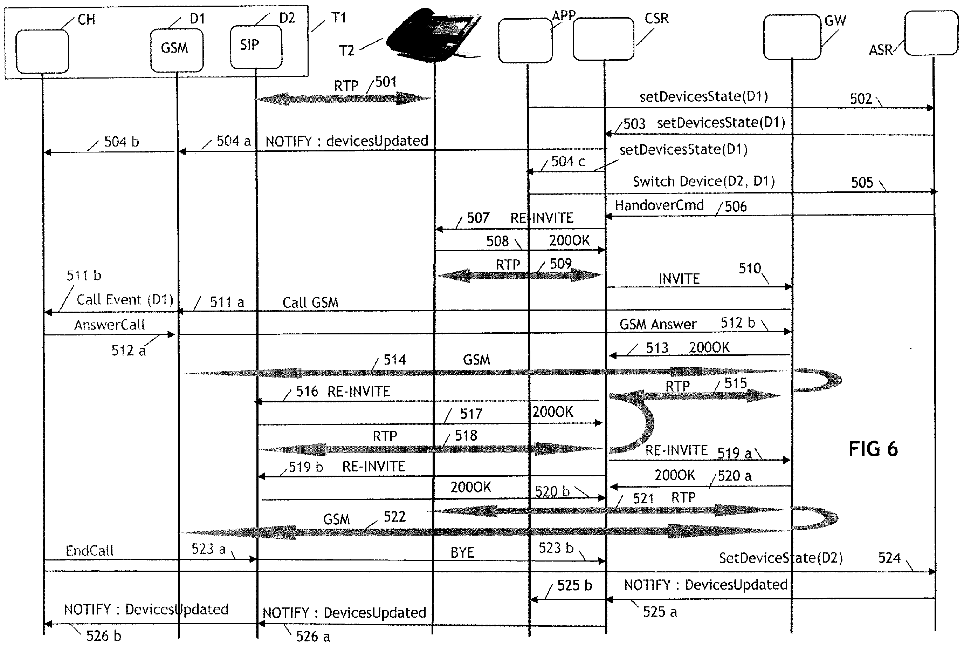

La **figure 6** représente les échanges de signaux dans un exemple de transfert d'une communication d'un réseau local SIP/WiFi vers un réseau global GSM, déclenché par une application tierce APP exécutée par un serveur distant et qui connait la localisation courante du terminal T1.
- 501 : Une communication VOIP a été établie entre le dispositif SIP D2 du terminal T1 et un terminal quelconque T2 relié au réseau public fixe PSTN. Cette communication utilise le protocole RTP pour le transport des signaux vocaux.
- 502 : L'application APP détecte que le terminal T1 est en train de quitter la zone de couverture du réseau WLAN. Elle décide alors d'activer le dispositif GSM D1 et de déclencher un transfert de la communication du réseau local WLAN vers le réseau global. Pour commander au serveur de communication CSR de faire ce transfert, elle envoie au serveur d'application ASR un message « SetDevicesState(D1) ». Ce message contient l'identificateur IMEI (International Mobile Equipment Identity) du dispositif GSM D1. Ce message est interprété par le serveur d'application ASR comme signifiant que le dispositif GSM D1 est activé. Autrement dit, une communication peut passer par le réseau global GSM.
- 503 : Le serveur d'applications ASR retransmet le message « SetDevicesState(D1) » au serveur de communication CSR.
- 504 a : Le serveur de communication CSR envoie un message «NOTIFY : DevicesUpdated » au dispositif SIP D2 pour activer de dispositif GSM D1.
- 504 b : Le dispositif SIP D2 retransmet ce message «NOTIFY : DevicesUpdated » au gestionnaire d'appels CH qui active le dispositif GSM D1.
- 504 b : Le serveur de communication CSR envoie un message «NOTIFY : DevicesUpdated » à l'application APP pour confirmer que le dispositif GSM D1 a été activé.
- 505: : L'application APP envoie au serveur d'applications ASR, via une interface de transmission de données, un message «switchDevice(D2, D1) » pour demander le transfert de la communication vers le réseau GSM.
- 506 : Le serveur d'application ASR envoie alors un message « HandoverCmd » au serveur de communication CSR. Ce message est interprété par le serveur de communication CSR comme signifiant qu'il doit réaliser un transfert de communication vers le dispositif GSM D1 qui vient d'être activé.
- 507 : Le serveur de communication CSR réalise le transfert de communication en commençant par établir une nouvelle communication entre le terminal T2 et le terminal T1 via le réseau global GSM , en envoyant un message «RE-INVITE » au terminal T2. Ce message lui demande l'autorisation de modifier la session en cours en vue de réaliser une conférence à trois.
- 508 : Le terminal T2 répond par un message d'acceptation 200OK.
- 509 : Une nouvelle communication VOIP, supportée par le protocole RTP, est alors établie entre le terminal T2 et le serveur de communication CSR, via une passerelle non représentée, intégrée au réseau publique fixe PSTN.
- 510 : Le serveur de communication CSR envoie un message « INVITE » à la passerelle GW, en vue d'établir une autre nouvelle communication via le réseau global GSM.
- 511a : La passerelle GW envoie un message d'appel « Call GSM » au dispositif GSM D1 du terminal T1.
- 511b : Le dispositif GSM D1 envoie alors un message « Call Event (D1) « au gestionnaire d'appel CH pour l'informer de l'arrivée d'un appel.
- 512 a : Le gestionnaire d'appel CH analyse ce message et décide qu'il correspond à un transfert de communication en cours vers un nouveau dispositif et répond au dispositif GSM D1 par un message « AnswerCall » qui lui commande de prendre l'appel.
- 512 b : Le dispositif GSM D1 prend l'appel : Il répond en envoyant à la passerelle GW un message « GSM Answer ».
- 513 : La passerelle GW convertit ce message« GSM Answer » en un message « 200OK » qu'elle envoie au serveur de communication CSR.
- 514, 515 : Une nouvelle communication est établie entre le dispositif GSM D1 du terminal T1, et le serveur de communication CSR, via la passerelle GW. Une première partie 314 de cette nouvelle communication utilise les protocoles GSM pour le transport des signaux vocaux entre le dispositif GSM D1 du terminal T1 et la passerelle GW. Une deuxième partie 315 de cette nouvelle communication utilise le protocole RTP pour le transport des signaux vocaux de la passerelle GW au serveur de communication CSR.
- 516 : Le serveur de communication envoie un message « RE-INVITE » au dispositif SIP D2 du terminal T1 pour demander une modification de la session en cours, en vue de réaliser une conférence à trois.
- 517: Le dispositif SIP D2 accepte en envoyant un message « 200OK » au serveur de communication CSR.
- 518 : Une autre nouvelle communication VOIP est établie entre le serveur de communication CSR et le dispositif SIP D2 du terminal T1. Cette communication utilise le protocole RTP pour le transport des signaux vocaux. Temporairement, le serveur de communication CSR relie ces deux communications 514 - 515 et 518 de façon que le terminal T2 soit en conférence avec le dispositif GSM D1 et le dispositif SIP D2 du terminal T1. Le terminal T1, par l'action du gestionnaire d'appel CH, connecte ses interfaces homme-machine (micro, écran, lecteur vidéo) au dispositif GSM D1.
- 519 : Le serveur de communication envoie un message « RE-INVITE » à la passerelle GW pour modifier les sessions en cours de façon à ce que la communication entre le dispositif GSM D1 et le terminal T2 ne passe plus par le serveur de communication CSR mais passe seulement par la passerelle GW.
- 520 : La passerelle répond par un message « 200OK ».
- 521, 522 : Une communication relie alors le terminal T2 et le dispositif GSM D1 via la passerelle GW. Une partie VOIP, référencée 521, de cette communication, entre le terminal T2 et la passerelle GW, est supportée par le protocole RTP. Une seconde partie de cette communication 522, entre la passerelle GW et le dispositif GSM D1 du terminal T1, est supportée par les protocoles GSM. Une nouvelle communication est donc établie entre les terminaux T1 et T2, en passant par le réseau global GSM .
- 523 a : Le gestionnaire d'appels CH termine la communication qui existait entre le terminal T2 et le dispositif D2 en envoyant un message de fin d'appel vers ce dispositif SIP D2.
- 523 b : Le dispositif SIP D2 envoie alors un message « BYE » au serveur de communication CSR pour lui demander de relâcher la communication via le réseau local WLAN.
- 524 : Le gestionnaire d'appels CH envoie en outre un message « SetDeviceState(D2) » au serveur d'application ASR, via le dispositif GSM D1, pour indiquer que le dispositif SIP D2 va être désactivé. Ce message peut également être remplacé par un message SIP UNREGISTER qui indique que le dispositif SIP D2 n'est plus accessible. Le serveur d'application ASR enregistre ce changement d'état du dispositif SIP D2 du terminal T1.
- 525 a : Le serveur d'application ASR indique qu'il a enregistré que le dispositif SIP D2 n'est plus activé, en envoyant un message « NOTIFY : DevicesUpdated » au serveur de communication CSR. Le serveur de communication CSR enregistre ce changement d'état.
- 525 b : Le serveur de communication CSR retransmet ce message « NOTIFY : DevicesUpdated » à l'application APP.
- 526 a : Le serveur de communication CSR retransmet ce message « NOTIFY : DevicesUpdated » au dispositif SIP D2 du terminal T1.
- 526 b : Le dispositif SIP D2 du terminal T1 retransmet ce message « NOTIFY : DevicesUpdated » au gestionnaire d'appels CH.

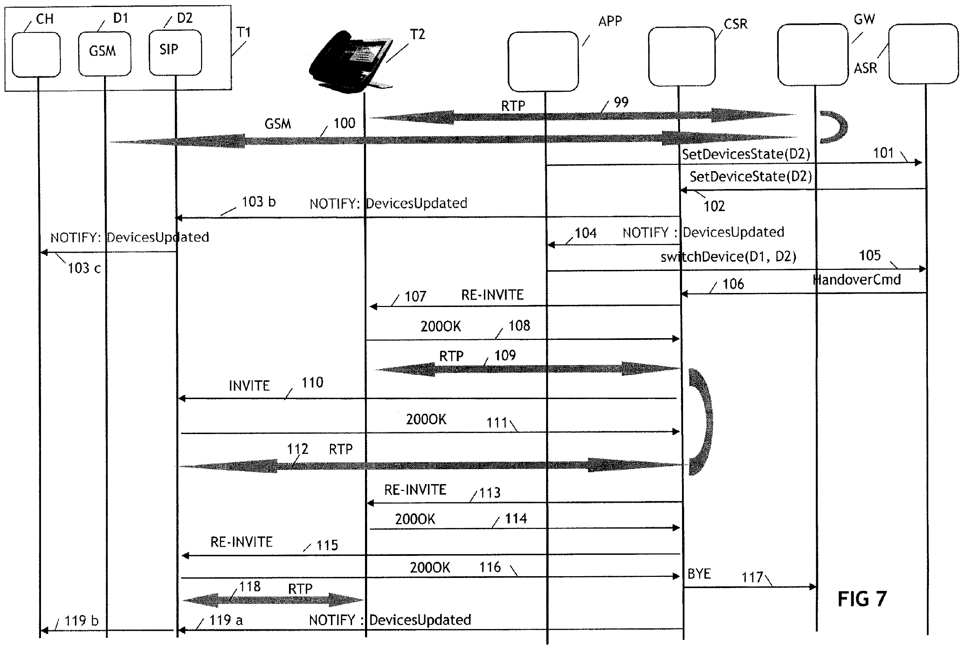

La **figure 7** représente les échanges de signaux dans l'exemple de transfert d'une communication d'un réseau GSM vers un réseau SIP/WiFi, déclenché par une application tierce APP exécutée par un serveur distant et qui connait la localisation courante du terminal T1. Une communication a été établie entre le dispositif GSM D1 du terminal T1, et un terminal quelconque T2 relié au réseau public fixe PSTN.
- 99, 100 : Cette communication comporte une première partie VOIP, référencée 99, utilisant le protocole RTP (Real Time Transport Protocole) pour le transport des signaux vocaux entre le terminal T2 et la passerelle GW via le serveur de communication CSR ; et une seconde partie, référencée 100, utilisant la pile de protocoles GSM pour le transport des signaux vocaux entre le dispositif GSM, D1, du terminal T1 et la passerelle GW.
- 101 : Au moment où l'application APP détecte que le terminal T1 entre dans la zone de couverture du réseau local WLAN, elle envoie un message « SetDeviceState (D2) » au serveur d'application ASR pour lui indiquer que le dispositif SIP D2 du terminal T1 va être activé.
- 102 : Le serveur d'application ASR retransmet ce message « SetDeviceState (D2) » au serveur de communication CSR. Ce message contient l'identificateur URI (Universal Ressource Identifier) du dispositif SIP D2. Ce message est interprété par le serveur de communication CSR comme signifiant que le dispositif SIP D2 est activé. Autrement dit, une communication ne doit passer désormais que par le réseau local SIP/WiFi.
- 103 a : Puis le serveur de communication CSR envoie un message « NOTIFY : DevicesUpdated » au dispositif SIP D2.
- 103 b : Le dispositif SIP D2 retransmet ce message « NOTIFY : DevicesUpdated » au gestionnaire d'appels CH pour lui indiquer que le serveur d'application ASR a bien enregistré que le dispositif SIP D2 est activé.
- 104 : Le serveur de communication CSR envoie le même message « NOTIFY : Devices updated » à l'application APP pour lui indiquer que le dispositif SIP D2 est activé.
- 105: L'application APP demande alors au serveur d'application ASR un transfert de la communication en cours, du réseau global GSM au réseau local SIP/WiFi, en envoyant un message de demande de service « switchDevice(D1, D2) », via une interface de transmission de données qui utilise un réseau de transmission de données. Ce réseau de transmission de données peut être un réseau global de type GPRS, EDGE, CDMA, HSDPA, ou il peut être le réseau local sans fil WLAN de l'entreprise considéré, ou encore un réseau local ou global filaire.
- 106 : Le serveur d'application ASR envoie alors un message « HandoverCmd » au serveur de communication CSR. Ce message est interprété par le serveur de communication CSR comme signifiant qu'il doit réaliser un transfert de communication vers le dispositif SIP D2 qui vient d'être activé.
- 107 : Le serveur de communication CSR réalise le transfert de communication en commençant par établir une nouvelle communication entre le terminal T2 et le terminal T1 via le réseau local SIP/WiFi, en envoyant un message «RE-INVITE » au terminal T2. Ce message lui demande l'autorisation de modifier la session en cours, en vue de réaliser une conférence à trois.
- 108 : Le terminal T2 répond par un message d'acceptation 200OK.
- 109 : Une première partie d'une nouvelle communication VOIP est alors établie entre le terminal T2 et le serveur de communication CSR (via une passerelle, non représentée, intégrée au réseau fixe public PSTN). Elle est supportée par le protocole RTP.
- 110 : Le serveur de communication CSR envoie un message INVITE au dispositif SIP D2 du terminal T1 pour établir une seconde partie de la nouvelle communication, via le réseau local SIP/WiFi.
- 111 : Le dispositif SIP D2 du terminal T1 répond par un message d'acceptation 200OK. Le terminal T1 connecte ses interfaces homme-machine (micro, écran, lecteur vidéo) au dispositif SIP D2.
- 112 : Une seconde partie de la nouvelle communication VOIP est alors établie entre le dispositif SIP D2 du terminal T1 et le serveur de communication CSR. Elle est supportée par le protocole RTP. La nouvelle communication 209 - 212 est donc établie entre les terminaux T1 et T2, en passant par le réseau local SIP/WiFi. Temporairement, le serveur de communication CSR relie la communication 200 - 201 et la communication 209 - 212 de façon que le terminal T2 soit en conférence à trois, avec le dispositif GSM D1 et le dispositif SIP D2 du terminal T1.
- 113 : Le serveur de communication CSR envoie un message «RE-INVITE » au terminal T2 via le réseau local WLAN. Ce message lui demande l'autorisation de modifier la session en cours.
- 114 : Le terminal T2 répond par un message d'acceptation 200OK.
- 115 : Le serveur de communication CSR envoie un message «RE-INVITE » au dispositif SIP D2 du terminal T1. Ce message lui demande l'autorisation de modifier la session en cours.
- 116 : Le dispositif SIP D2 du terminal T1 répond par un message d'acceptation 200OK.
- 117: Le serveur de communication CSR envoie un message «BYE » à la passerelle GW pour la libérer. La communication via le réseau global GSM est ainsi fermée. Le terminal T1 désactive le dispositif GSM D1.
- 118: Une communication VOIP, supportée par le protocole RTP, est alors établie entre le terminal T2 et le dispositif SIP D2 du terminal T1.
- 119 a : Le serveur de communication CSR envoie un message «NOTIFY : DevicesUpdated » au dispositif SIP D2 du terminal T1 pour lui indiquer qu'il a enregistré que le dispositif GSM D1 a été désactivé.
- 1119 b: Le dispositif SIP D2 retransmet ce message «NOTIFY : DevicesUpdated » au gestionnaire d'appels CH.

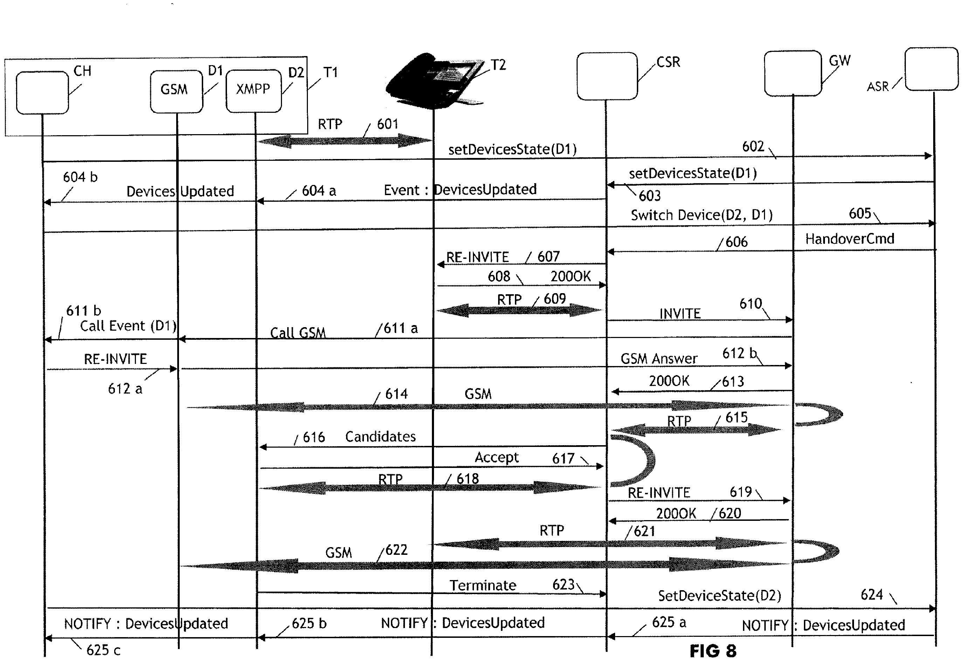

La **figure 8** représente les échanges de signaux dans un exemple de transfert d'une communication d'un réseau XMPP/LTE (Extensible Messaging and Presence Protocol/Long Term Evolution) vers un réseau GSM, déclenché par le terminal :
- 601 : Une communication VOIP a été établie entre le dispositif XMPP D2 du terminal T1 et un terminal quelconque T2 relié au réseau public fixe PSTN. Cette communication utilise le protocole RTP pour le transport des signaux vocaux. Le dispositif XMPP D2 est activé.
- 602 : Le terminal T1 détecte qu'il est en train de quitter la zone de couverture du réseau XMPP/LTE. Le gestionnaire d'appels CH du terminal T1 active alors le dispositif GSM D1 et il décide de déclencher un transfert de la communication du réseau XMPP/LTE vers le réseau GSM. Pour commander au serveur de communication CSR de faire ce transfert, le gestionnaire d'appels CH envoie un message « SetDevicesState(D1) » au serveur d'application ASR, via l'interface HTTPI et l'interface PSI. Ce message contient l'identificateur IMEI (International Mobile Equipment Identity) du dispositif GSM D1. Ce message est interprété par le serveur d'application ASR comme signifiant que le dispositif GSM D1 est activé. Autrement dit, une communication peut passer par le réseau GSM.
- 603 : Le serveur d'applications ASR retransmet le message « SetDevicesState(D1) » au serveur de communication CSR.
- 604 a : Le serveur de communication CSR envoie un message «Event : DevicesUpdated » au dispositif XMPP D1 pour indiquer qu'il a bien enregistré que le dispositif GSM D1 a été activé.
- 604 b : Le dispositif XMPP D1 retransmet ce message «NOTIFY : DevicesUpdated » au gestionnaire d'appels CH.
- 605 : Le gestionnaire d'appels CH envoie au serveur d'applications ASR, via l'interface HTTPI et l'interface PSI, un message «switchDevice(D2, D1) » pour demander le transfert de la communication vers le réseau GSM.
- 606 : Le serveur d'application ASR envoie alors un message « HandoverCmd » au serveur de communication CSR. Ce message est interprété par le serveur d'application ASR comme signifiant qu'il doit réaliser un transfert de communication vers le dispositif GSM D1 qui vient d'être activé.
- 607 : Le serveur de communication CSR réalise le transfert de communication en commençant par établir une nouvelle communication entre le terminal T2 et le terminal T1 via le réseau GSM, en envoyant un message «RE-INVITE » au terminal T2. Ce message lui demande l'autorisation de modifier la session en cours en vue de réaliser une conférence à trois.
- 608 : Le terminal T2 répond par un message d'acceptation 200OK.
- 609 : Une nouvelle communication VOIP, supportée par le protocole RTP, est alors établie entre le terminal T2 et le serveur de communication CSR, via une passerelle non représentée, intégrée au réseau publique fixe PSTN.
- 610 : Le serveur de communication CSR envoie un message « INVITE » à la passerelle GW, en vue d'établir une autre nouvelle communication via le réseau GSM.
- 611a : La passerelle GW envoie un message d'appel « Call GSM » au dispositif GSM D1 du terminal T1.
- 611b : Le dispositif GSM D1 envoie alors un message « Call Event (D1) « au gestionnaire d'appel CH pour l'informer de l'arrivée d'un appel.
- 612 a: Le gestionnaire d'appel CH répond au dispositif GSM D1 par un message « Answer Call » qui lui commande de prendre l'appel.
- 612 b : Le dispositif GSM D1 prend l'appel : Il répond en envoyant à la passerelle GW un message « GSM Answer ».
- 613 : La passerelle GW convertit ce message « GSM Answer » en un message « 200OK » qu'elle envoie au serveur de communication CSR.
- 614, 615 : Une nouvelle communication est établie entre le dispositif GSM D1 du terminal T1, et le serveur de communication CSR, via la passerelle GW. Une première partie, référencée 614, de cette nouvelle communication utilise les protocoles GSM pour le transport des signaux vocaux entre le dispositif GSM D1 du terminal T1 et la passerelle GW. Une deuxième partie VOIP, référencée 615, de cette nouvelle communication utilise le protocole RTP pour le transport des signaux vocaux de la passerelle GW au serveur de communication CSR.
- 616 : Le serveur de communication envoie un message « Candidates » au dispositif XMPP D2 du terminal T1 pour demander une modification de la session en cours, en vue de réaliser une conférence à trois.
- 617 : Le dispositif XMPP D2 accepte en envoyant un message « Accept » au serveur de communication CSR.
- 618 : Une autre nouvelle communication VOIP est établie entre le serveur de communication CSR et le dispositif XMPP D2 du terminal T1. Cette communication utilise le protocole RTP pour le transport des signaux vocaux. Temporairement, le serveur de communication CSR relie ces deux communications 614 - 615 et 618 de façon que le terminal T2 soit en conférence avec le dispositif GSM D1 et le dispositif XMPP D2 du terminal T1. Le terminal T1 connecte ses interfaces homme-machine (micro, écran, lecteur vidéo) au dispositif GSM D1.
- 619 : Le serveur de communication envoie un message « RE-INVITE » à la passerelle GW pour modifier les sessions en cours de façon à ce que la communication entre le dispositif GSM D1 et le terminal T2 ne passe plus par le serveur de communication CSR mais passe seulement par la passerelle GW.
- 620 : La passerelle répond par un message « 200OK ».
- 621, 622 : Une communication relie alors le terminal T2 et le dispositif GSM D1 via la passerelle GW. Une partie 321 de cette communication, entre le terminal T2 et la passerelle GW, est supportée par le protocole RTP. Une seconde partie de cette communication 322, entre la passerelle GW et le dispositif GSM D1 du terminal T1, est supportée par les protocoles GSM. Une nouvelle communication est donc établie entre les terminaux T1 et T2, en passant par le réseau global GSM.
- 623 : Le dispositif XMPP D2 envoie un message « Terminate » au serveur de communication CSR pour lui demander de relâcher la communication via le réseau XMPP/LTE.
- 624 : Le gestionnaire d'appels CH envoie en outre un message « SetDeviceState(D2) » au serveur d'application ASR, via le dispositif GSM D1, pour indiquer que le dispositif XMPP D2 va être désactivé. Le serveur d'application ASR enregistre ce changement d'état du dispositif XMPP D2 du terminal T1.
- 625 a : Le serveur d'application ASR accuse réception en envoyant un message « NOTIFY : DevicesUpdated » au serveur de communication CSR. Le serveur de communication CSR enregistre ce changement d'état.
- 625 b : Le serveur de communication CSR retransmet ce message « NOTIFY : DevicesUpdated » au dispositif XMPP D2 du terminal T1.
- 625 c : Le dispositif XMPP D2 du terminal T1 retransmet ce message « NOTIFY : DevicesUpdated » au gestionnaire d'appels CH.

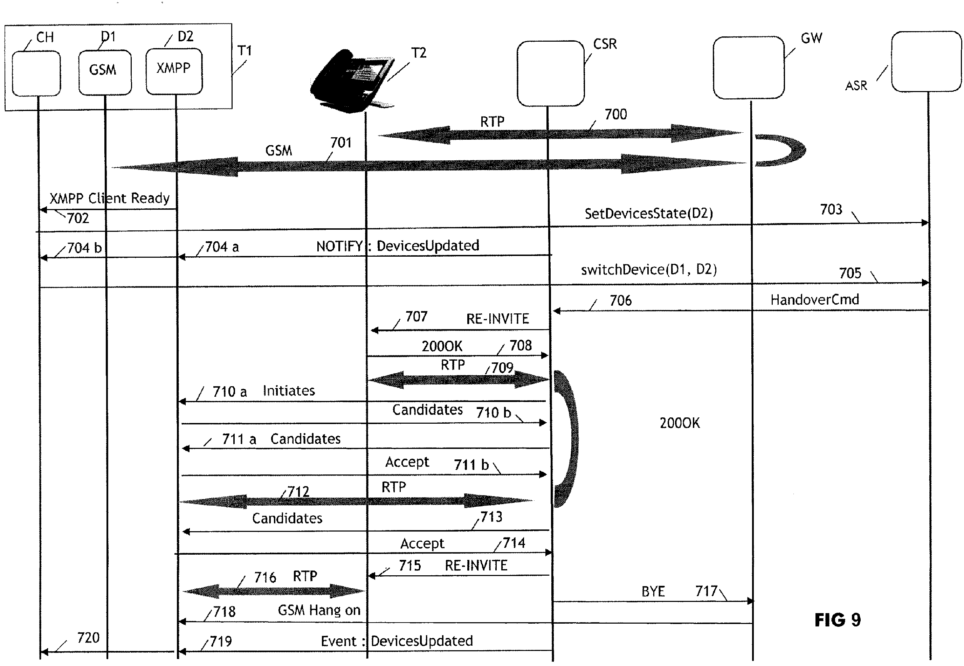

La **figure 9** représente les échanges de signaux dans un exemple de transfert d'une communication d'un réseau GSM vers un réseau XMPP/LTE, déclenché par le terminal.
- 700, 701 : Une communication a été établie entre le dispositif GSM D1 du terminal T1, et un terminal quelconque T2 relié au réseau public fixe PSTN. Cette communication comporte une première partie VOIP, référencée 200, utilisant le protocole RTP (Real Time Transport Protocole) pour le transport des signaux vocaux entre le terminal T2 et la passerelle GW via le serveur de communication CSR ; et une seconde partie 202 utilisant la pile de protocoles GSM pour le transport des signaux vocaux entre le dispositif GSM, D1, du terminal T1 et la passerelle GW.
- 702 : Au moment où le terminal T1 entre dans la zone de couverture du réseau LTE, le dispositif XMPP D2 s'enregistre sur un serveur XMPP (non représenté sur la figure mais pouvant faire partie du système de communication d'entreprise CSY) et envoie un message « XMPP Client Ready » au gestionnaire d'appels CH du terminal T1 pour lui indiquer que le dispositif XMPP D2 devient actif.
- 703 : Le gestionnaire d'appels CH du terminal T1 envoie un message « SetDevicesState(D2) » au serveur d'applications ASR, dans le système de communication d'entreprise CSY. Ce message contient l'identificateur JID (Jabber Identifier) du dispositif XMPP D2. Ce message est interprété par le serveur d'applications ASR comme signifiant que le dispositif XMPP D2 est activé. Autrement dit, une communication ne doit passer désormais que par le réseau XMPP/LTE.
- 704 a : Le serveur de communication CSR répond au dispositif XMPP D2 du terminal T1 par un message « NOTIFY : Devices updated » qui indique qu'il a mémorisé le fait que le dispositif XMPP D2 est activé.
- 704 b : Le dispositif XMPP D2 retransmet ce message « NOTIFY : Devices updated » au gestionnaire d'appels CH.
- 705 : Le gestionnaire d'appels CH peut alors demander au serveur d'applications ASR qui est intégré au système de communication d'entreprise CSY, un transfert de la communication en cours, du réseau GSM au réseau XMPP/LTE. Il fait cette demande en envoyant un message de demande de service « switchDevice(D1, D2) », via l'interface HTTPI et l'interface PSI, en utilisant un réseau de transmission de données, de préférence le réseau LTE (Ce réseau de transmission de données pourrait être un réseau global de type GPRS, EDGE, CDMA, HSDPA, ou il peut être le réseau local sans fil de l'entreprise considéré).
- 706 : Le serveur d'application ASR envoie alors un message « HandoverCmd » au serveur de communication CSR. Ce message est interprété par le serveur de communication CSR comme signifiant qu'il doit réaliser un transfert de communication vers le dispositif XMPP D2 qui vient d'être activé.
- 707 : Le serveur de communication CSR réalise le transfert de communication en commençant par établir une nouvelle communication entre le terminal T2 et le terminal T1 via le réseau XMPP/LTE, en envoyant un message «RE-INVITE » au terminal T2. Ce message lui demande l'autorisation de modifier la session en cours, en vue de réaliser une conférence à trois.
- 708 : Le terminal T2 répond par un message d'acceptation 200OK.
- 709 : Une première partie d'une nouvelle communication VOIP est alors établie entre le terminal T2 et le serveur de communication CSR (via une passerelle, non représentée, intégrée au réseau fixe public PSTN). Elle est supportée par le protocole RTP.
- 710 a : Le serveur de communication CSR envoie un message « Initiates » au terminal T1 pour établir une seconde partie de la nouvelle communication, via le réseau XMPP/LTE.
- 710 b : Le dispositif XMPP D2 répond en envoyant un message « Candidates » au serveur de communication CSR.
- 711a : Le serveur de communication CSR envoie un message « Candidates » au dispositif XMPP D2 du terminal T1 pour établir une seconde partie de la nouvelle communication, via le réseau XMPP/LTE.
- 711b : Le dispositif XMPP D2 répond en envoyant un message « Accept » au serveur de communication CSR.
- 712 : Une seconde partie de la nouvelle communication VOIP est alors établie entre le dispositif XMPP D2 du terminal T1 et le serveur de communication CSR. Elle est supportée par le protocole RTP. La nouvelle communication 709 - 712 est donc établie entre les terminaux T1 et T2, en passant par le réseau local XMPP/LTE. Temporairement, le serveur de communication CSR relie la communication 700 - 701 et la communication 709 - 712 de façon que le terminal T2 soit en conférence à trois, avec le dispositif GSM D1 et le dispositif XMPP D2 du terminal T1.
- 713 : Le serveur de communication CSR envoie un message « Candidates » au dispositif XMPP D2 du terminal T1. Ce message lui demande de modifier la session en cours afin de réaliser une liaison RTP directe avec le terminal T2. Ensuite le serveur de communication CSR termine la conférence.
- 714 : Le dispositif XMPP D2 répond en envoyant un message « Accept » au serveur de communication CSR.
- 715 : Le serveur de communication CSR envoie un message «RE-INVITE » au terminal T2. Ce message lui demande l'autorisation de modifier la session en cours afin de réaliser une liaison RTP directe avec le dispositif XMPP D2 du terminal T1
- 716 : Une communication VOIP, supportée par le protocole RTP, est alors établie entre le terminal T2 et le dispositif XMPP D2 du terminal T1, via le réseau XMPP/LTE.
- 717 : Le serveur de communication CSR envoie un message «BYE » à la passerelle GW pour la libérer. La communication via le réseau GSM est ainsi fermée. Le terminal T1 désactive le dispositif GSM D1.
- 718 : La passerelle GW envoie un message « GSM Hang on » au dispositif XMPP D2 pour confirmer qu'elle a fermée la communication via le réseau GSM.
- 719 : Le serveur de communication CSR envoie un message «Event : DevicesUpdated » au dispositif XMPP D2 du terminal T1 pour lui indiquer qu'il a enregistré que le dispositif GSM D1 a été désactivé.
- 720 : Le dispositif XMPP D2 retransmet ce message «Event : DevicesUpdated » au gestionnaire d'appels CH.

## Revendications

1. Terminal téléphonique mobile multimode (T1) permettant le transfert d'une communication téléphonique d'un réseau sans fil, à un autre, comportant :
- une interface (CSI) pour supporter les communications à commutation de circuits, comportant une pluralité de dispositifs de communication (D1, D3, ...) correspondant à différents protocoles pour des communications à commutation de circuits,
- une interface (PSI) pour supporter les communications à commutation de paquets, comportant une pluralité de dispositifs de communication (D2, D4, ...) correspondant à différents protocoles pour des communications à commutation de paquets,
- un gestionnaire de transfert de communication (HOM), pour décider des transferts de communication,
- un moniteur d'accès (ACM) pour activer ou désactiver les dispositifs (D1-D4, ... etc.) que comportent lesdites interfaces (CSI et PSI), en fonction :
-- d'informations d'état de disponibilité de ces dispositifs,
-- du type et de l'état de la connectivité radio offerte par le terminal,
-- et de préférences définies par un utilisateur ou un administrateur de flotte mobile ;
- un gestionnaire d'appels (CH) pour :
-- gérer les appels présentés à l'utilisateur en fonction du statut courant de chacun des dispositifs (D1-D4 ... etc.) que comporte l'interface (CSI) pour supporter les communications à commutation de circuits, et l'interface (PSI) pour supporter les communications à commutation de paquets,
-- et gérer le basculement éventuel d'une session d'un dispositif de communication (D1-D4 ... etc.) vers un autre en fonction des signaux provenant du gestionnaire de transfert de communication (HOM) ;
**caractérisé en ce que** :
- l'interface (CSI) pour supporter les communications à commutation de circuits, comporte une pluralité de dispositifs de communication (D1, D3, ...) correspondant à différents protocoles pour des communications à commutation de circuits, et aptes à établir des sessions multimédia,
- l'interface (PSI) pour supporter les communications à commutation de paquets, comporte une pluralité de dispositifs de communication (D2, D4, ...) correspondant à différents protocoles pour des communications à commutation de paquets, et aptes à établir des sessions multimédia,
- le gestionnaire d'appels (CH) comporte une couche d'abstraction (AL) qui permet d'échanger des commandes génériques et des informations génériques avec tout dispositif de communication (D1-D4 ... etc) que peut comporter l'interface (CSI) pour supporter des communications à commutation de circuits, et l'interface (PSI) pour supporter des communications à commutation de paquets, cette couche d'abstraction comportant :
- des moyens (ADD) pour activer et désactiver les dispositifs de communication (D1-D4 ... etc),
- des moyens (SES) pour initier, prendre et terminer une session multimédia ;
- et des moyens (STA) pour consulter l'état de disponibilité courant des dispositifs de communication.

2. Terminal selon la revendication 1, **caractérisé en ce que** ladite couche d'abstraction (AL) qui permet d'échanger des commandes génériques et des informations génériques comporte en outre des moyens (REG) pour enregistrer le gestionnaire d'appel (CH) auprès des dispositifs de communication (D1-D4 ... etc) afin de pouvoir transmettre au gestionnaire d'appels (CH) des notifications relatives à l'état courant des sessions de communication.

3. Terminal selon la revendication 1, **caractérisé en ce que** ladite couche d'abstraction (AL) qui permet d'échanger des commandes génériques et des informations génériques comporte en outre des moyens (CAR) pour caractériser les sessions multi-média établies au travers des dispositifs de communication (D1-D4 ... etc) afin de permettre d'associer lesdites sessions à un même appel en court de transfert.

4. Terminal selon la revendication 1, **caractérisé en ce que** le gestionnaire d'appels (CH) comporte en outre des moyens (APS) pour associer une pluralité de sessions multimédia établies au travers des dispositifs de communication (D1-D4 ... etc) à un même appel en cours de transfert.

## Patentansprüche

1. Multimode-Mobiltelefonendgerät (T1) zum Übertragen einer telefonischen Kommunikation von einem Drahtlosnetzwerk in ein anderes, umfassend:
- eine Schnittstelle (CSI) zum Unterstützen von schaltungsvermittelter Kommunikation, umfassend eine Vielzahl von Kommunikationsvorrichtungen (D1, D3...) entsprechend den verschiedenen Protokollen für die schaltungsvermittelte Kommunikation,
- eine Schnittstelle (PSI) zum Unterstützen von paketvermittelter Kommunikation, umfassend eine Vielzahl von Kommunikationsvorrichtungen (D2, D4...) entsprechend den verschiedenen Protokollen für die paketvermittelte Kommunikation,
- ein Verwaltungsprogramm für die Kommunikationsübertragung (HOM) zum Bestimmen der Kommunikationsübertragungen,
- einen Zugangsbildschirm (ACM) zum Aktivieren oder Deaktivieren der Vorrichtungen (D1-D4 etc.), welche die besagten Schnittstellen (CSI und PSI) umfassen, entsprechend:
-- den Informationen zum Verfügbarkeitszustand dieser Vorrichtungen,
-- dem Typ und dem Zustand der vom Endgerät angebotenen Funkkonnektivität,
-- und den durch einen Benutzer oder einen Verwalter der mobilen Ressourcen festgelegten Präferenzen;
- ein Anruf-Verwaltungsprogramm (CH) zum:
-- Verwalten der dem Benutzer präsentierten Anrufe entsprechend dem aktuellen Status jeder einzelnen Vorrichtung (D1-D4 etc.), die eine Schnittstelle (CSI) umfasst zum Unterstützen der schaltungsvermittelten Kommunikation und eine Schnittstelle (PSI) zum Unterstützen der paketvermittelten Kommunikation,
-- und zum Verwalten des möglichen Wechsels von einer Sitzung einer Kommunikationsvorrichtung (D1-D4 etc.) zu einer anderen, entsprechend den Signalen vom Verwaltungsprogramm zur Kommunikationsübertragung (HOM);
**dadurch gekennzeichnet, dass**:
- die Schnittstelle (CSI) zum Unterstützen von schaltungsvermittelter Kommunikation eine Vielzahl von Kommunikationsvorrichtungen (D1, D3...) umfasst, entsprechend den verschiedenen Protokollen für die schaltungsvermittelte Kommunikation, die geeignet sind zum Herstellen von Multimedia-Sitzungen,
- die Schnittstelle (PSI) zum Unterstützen von paketvermittelter Kommunikation eine Vielzahl von Kommunikationsvorrichtungen (D2, D4...) umfasst, entsprechend den verschiedenen Protokollen für die paketvermittelte Kommunikation, die geeignet sind zum Herstellen von Multimedia-Sitzungen,
- das Anruf-Verwaltungsprogramm (CH) eine Abstraktionsschicht (AL) umfasst, welche den Austausch von generischen Befehlen und generischen Informationen mit sämtlichen Kommunikationsvorrichtungen (D1-D4 etc.) ermöglicht, welche die Schnittstelle (CSI) zum Unterstützen der schaltungsvermittelten Kommunikation und die Schnittstelle (PSI) zum Unterstützen der paketvermittelten Kommunikation umfassen kann, wobei diese Abstraktionsschicht umfasst:
- Mittel (ADD) zum Aktivieren und Deaktivieren der Kommunikationsvorrichtungen (D1-D4 etc.),
- Mittel (SES) zum Beginnen, Halten und Beenden einer Multimedia-Sitzung;
- und Mittel (STA) zum Abfragen des aktuellen Verfügbarkeitszustands der Kommunikationsvorrichtungen.

2. Endgerät nach Anspruch 1, **dadurch gekennzeichnet, dass** besagte Abstraktionsschicht (AL), welche das Austauschen von generischen Befehlen und generischen Informationen ermöglicht, außerdem Mittel (REG) zum Speichern des Anruf-Verwaltungsprogramms (CH) bei den Kommunikationsvorrichtungen (D1-D4 etc.) umfasst, um dem Anruf-Verwaltungsprogramm (CH) Mitteilungen über den aktuellen Zustand der Kommunikationssitzungen übermitteln zu können.

3. Endgerät nach Anspruch 1, **dadurch gekennzeichnet, dass** besagte Abstraktionsschicht (AL), welche das Austauschen von generischen Befehlen und generischen Informationen ermöglicht, außerdem Mittel (CAR) zum Kennzeichnen der durch die Kommunikationsvorrichtungen (D1-D4 etc.) hergestellten Multimedia-Sitzungen umfasst, um besagte Sitzungen mit dem gleichen Anruf, der übertragen wird, verbinden zu können.

4. Endgerät nach Anspruch 1, **dadurch gekennzeichnet, dass** das Anruf-Verwaltungsprogramm (CH) außerdem Mittel (APS) zum Verbinden einer Vielzahl von durch die Kommunikationsvorrichtungen (D1-D4 etc.) hergestellten Multimedia-Sitzungen mit einem Anruf, der übertragen wird, umfasst.

## Claims

1. A multimodal mobile telephone terminal (T1) enabling the handover of a telephone communication from one wireless network to another, comprising:
- an interface (CSI) for supporting circuit-switched communications, comprising a plurality of communication devices (D1, D3, etc.) corresponding to different protocols for circuit-switched communications,
- an interface (PSI) for supporting packet-switched communications, comprising a plurality of communication devices (D2, D4, etc.) corresponding to different protocols for packet-switched communications,
- a communication handover manager (HOM), for deciding on communication handovers,
- an access monitor (ACM) to enable or disable the devices (D1-D4, ... etc.) that said interfaces (CSI and PSI) comprise, based on:
-- availability status information of those devices,
-- the type and status of the radio connectivity offered by the terminal,
-- and preferences defined by a user or administrator of a mobile fleet;
- a call manager (CH) to:
-- manage the calls presented to the user based on the current status of each of the devices (D1-D4 ... etc.) that the interface (CSI) for supporting circuit-switched communications comprises and that the interface (PSI) for supporting packet-switched communications comprises,
-- and managing the potential handover of a session from one communication device (D1-D4 ... etc.) to another based on the signals coming from the communication handover manager (HOM),
**characterized in that**:
- the interface (CSI) for supporting circuit-switched communications comprises a plurality of communication devices (D1, D3, ...) corresponding to different protocols for circuit-switched communications, and capable of establishing multimedia sessions,
- the interface (PSI) for supporting packet-switched communications comprises a plurality of communication devices (D2, D4, ...) corresponding to different protocols for packet-switched communications, and capable of establishing multimedia sessions,
- the call manager (CH) comprises an abstraction layer (AL) that makes it possible to exchange generic commands and generic information with any communication device (D1-D4, ...) that the interface (CSI) for supporting circuit-switched communications may comprise, and that the interface (PSI) for supporting packet-switched communications may comprise, said abstraction layer comprising:
- means (ADD) for enabling and disabling the communication devices (D1-D4)
- means (SES) for initiating, taking, and terminating a multimedia session;
- and means (STA) for checking the current availability status of the communication devices.

2. A terminal according to claim 1, **characterized in that** said abstraction layer (AL) that makes it possible to exchange generic commands and generic information further comprises means (REG) for registering the call manager (CH) with the communication devices (D1-D4 ... etc.) in order to be able to transmit to the call manager (CH) notifications related to the current status of the communication sessions.

3. A terminal according to claim 1, **characterized in that** said abstraction level (AL) that makes it possible to exchange generic commands and generic information further comprises means (CAR) for characterizing the multimedia sessions established through communication devices (D1-D4 ... etc.) in order to make it possible to associate said sessions with a single call in the course of being handed over.

4. A terminal according to claim 1, **characterized in that** the call manager further comprises means (APS) for associating a plurality of multimedia sessions established through communication devices (D1-D4 ... etc.) with a single call in the course of being handed over.
